(19) Europäisches Patentamt
European Patent Office
Office européen des brevets

(11) **EP 3 252 392 A1**

(12) **EUROPÄISCHE PATENTANMELDUNG**

(43) Veröffentlichungstag:
**06.12.2017 Patentblatt 2017/49**

(51) Int Cl.:
*F24H 7/04* (2006.01)   *F24D 19/00* (2006.01)
*F24H 9/20* (2006.01)

(21) Anmeldenummer: **17173609.3**

(22) Anmeldetag: **31.05.2017**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
Benannte Validierungsstaaten:
**MA MD**

(30) Priorität: **01.06.2016   DE 202016102932 U**

(71) Anmelder: **Olsberg GmbH**
**59939 Olsberg (DE)**

(72) Erfinder: **LAMMERS, Alexander**
**33102 Paderborn (DE)**

(74) Vertreter: **Manske, Jörg et al**
**Fritz Patent- und Rechtsanwälte**
**Partnerschaft mbB**
**Postfach 1580**
**59705 Arnsberg (DE)**

(54) **ELEKTRISCHES SPEICHERHEIZGERÄT**

(57)    Die Erfindung betrifft ein elektrisches Speicherheizgerät (1), umfassend ein Außengehäuse (2), innerhalb dessen ein elektrisch aufheizbarer Wärmespeicherkern (5) und ein Ventilator (6) untergebracht sind, wobei das Außengehäuse (2) eine Anzahl von Lufteintrittsöffnungen (210, 211), durch die Luft aus der Umgebung in das Außengehäuse (2) einströmen kann und durch eine Strömungsführung innerhalb des Außengehäuses (2) an dem Wärmespeicherkern (5) entlanggeführt werden kann und eine Anzahl von Luftaustrittsöffnungen (30), durch die die Luft nach der Erwärmung durch den Wärmespeicherkern (5) in die Umgebung austreten kann, aufweist, wobei
- die Lufteintrittsöffnungen (210, 211) in einem unteren Bereich des Außengehäuses (2) und die Luftaustrittsöffnungen (30) in einem oberen Bereich des Außengehäuses (2) ausgebildet sind,
- der Ventilator (6) dazu eingerichtet ist, die Luft aus der Umgebung durch die Lufteintrittsöffnungen (210, 211) anzusaugen und nach der Erwärmung durch den Wärmespeicherkern (5) oberhalb des Wärmespeicherkerns (5) durch die Luftaustrittsöffnungen (30) in die Umgebung auszustoßen, und
- oberhalb des Wärmespeicherkerns (5) eine schwenkbare Luftaustrittsklappe (7) angeordnet ist, die an eine Steuerungseinrichtung (8) angeschlossen ist, die dazu eingerichtet ist, den Ausstoß der erwärmten Luft aus den Luftaustrittsöffnungen (30) durch zumindest teilweises Öffnen und Schließen der Luftaustrittsklappe (7) zu regulieren.

Fig. 4

**Beschreibung**

Die vorliegende Erfindung betrifft ein elektrisches Speicherheizgerät, umfassend ein Außengehäuse, innerhalb dessen ein elektrisch aufheizbarer Wärmespeicherkern und ein Ventilator untergebracht sind, wobei das Außengehäuse eine Anzahl von Lufteintrittsöffnungen, durch die Luft aus der Umgebung in das Außengehäuse einströmen kann und durch eine Strömungsführung innerhalb des Außengehäuses an dem Wärmespeicherkern entlanggeführt werden kann und eine Anzahl von Luftaustrittsöffnungen, durch die die Luft nach der Erwärmung durch den Wärmespeicherkern in die Umgebung austreten kann, aufweist.

Gattungsgemäße elektrische Speicherheizgeräte sind aus dem Stand der Technik in unterschiedlichen Ausführungsformen bereits bekannt und werden unter anderem auch von der Anmelderin vertrieben. Bei diesen elektrischen Speicherheizgeräten erfolgen der Eintritt kühler Luft aus der Umgebung in das Innere des Außengehäuses und der Austritt der mit Hilfe des Wärmespeicherkerns erwärmten Luft aus dem Außengehäuse mit Hilfe von Lufteintritts- und Luftaustrittsöffnungen, die jeweils in einem unteren Bereich des Außengehäuses ausgebildet sind.

Die vorliegende Erfindung macht es sich zur Aufgabe, ein elektrisches Speicherheizgerät mit einer alternativen Strömungsführung der Luft zur Verfügung zu stellen.

Die Lösung dieser Aufgabe liefert ein elektrisches Speicherheizgerät der eingangs genannten Art mit den Merkmalen des kennzeichnenden Teils des Anspruchs 1. Die Unteransprüche betreffen vorteilhafte Weiterbildungen der Erfindung.

Ein erfindungsgemäßes elektrisches Speicherheizgerät zeichnet sich dadurch aus, dass

- die Lufteintrittsöffnungen in einem unteren Bereich des Außengehäuses und die Luftaustrittsöffnungen in einem oberen Bereich des Außengehäuses ausgebildet sind,
- der Ventilator dazu eingerichtet ist, die Luft aus der Umgebung durch die Lufteintrittsöffnungen anzusaugen und nach der Erwärmung durch den Wärmespeicherkern oberhalb des Wärmespeicherkerns durch die Luftaustrittsöffnungen in die Umgebung auszustoßen, und
- oberhalb des Wärmespeicherkerns eine schwenkbare Luftaustrittsklappe angeordnet ist, die an eine Steuerungseinrichtung angeschlossen ist, die dazu eingerichtet ist, den Ausstoß der erwärmten Luft aus den Luftaustrittsöffnungen durch zumindest teilweises Öffnen und Schließen der Luftaustrittsklappe zu regulieren.

Das erfindungsgemäße elektrische Speicherheizgerät stellt somit eine andersartige Strömungsführung der Luft zur Verfügung. Während im Stand der Technik die Luft aus der Umgebung durch die Lufteintrittsöffnungen, die in einem unteren Bereich des Außengehäuses ausgebildet sind, mittels des Ventilators angesaugt wird und nach der mittels des Wärmespeicherkerns erfolgten Erwärmung durch Luftaustrittsöffnungen, die ebenfalls in einem unteren Bereich des Außengehäuses ausgebildet sind, in die Umgebung ausgestoßen wird, erfolgt erfindungsgemäß ein Ansaugen der Luft durch die Luftaustrittsöffnungen im unteren Bereich des Gehäuses und der Ausstoß der erwärmten Luft durch entsprechende Luftaustrittsöffnungen in einem oberen Bereich des Außengehäuses. Der Ventilator unterstützt dabei die natürliche Konvektion der mittels des Wärmespeicherkerns erwärmten Luft. Mittels der Steuerungseinrichtung kann durch ein zumindest teilweises Öffnen beziehungsweise Schließen der Luftaustrittsklappe der Ausstoß der erwärmten Luft in vorteilhafter Weise reguliert werden.

Um zu verhindern, dass die Umgebungstemperatur im Bereich der Luftaustrittsöffnungen einen zulässigen Maximalwert überschreitet, wird in einer vorteilhaften Ausführungsform vorgeschlagen, dass die Luftaustrittsklappe mittels der Steuerungseinrichtung derart ansteuerbar ist, dass durch ein selektives Öffnen und Schließen der Luftaustrittsklappe die Umgebungstemperatur am Außengehäuse im Bereich der Luftaustrittsöffnungen regelbar ist.

In einer besonders zweckmäßigen Ausführungsform besteht die Möglichkeit, dass die Steuerungseinrichtung zwei Steuerelemente aufweist, die über ein Hebelelement miteinander verbunden sind, wobei ein erstes Steuerelement so ausgebildet ist, dass es bei aktiviertem Ventilator ein erstes Drehmoment M1 erzeugen kann, welches ein zumindest teilweises Öffnen der Luftaustrittsklappe bewirken kann, und wobei ein zweites Steuerelement so ausgebildet ist, dass es in Abhängigkeit von einer Umgebungstemperatur ein zweites Drehmoment M2 erzeugen kann, welches entgegengesetzt zum ersten Drehmoment gerichtet ist und ein Schließen der Luftaustrittsklappe bewirken kann. Wenn das erste Drehmoment M1, das vom ersten Steuerelement erzeugt wird, größer als das entgegengesetzte Drehmoment M2 des zweiten Steuerelements ist, wird die Luftaustrittsklappe zumindest teilweise geöffnet. Anderenfalls verbleibt die Luftaustrittsklappe in ihrer Schließstellung, so dass keine erwärmte Luft in die Umgebung ausgestoßen werden kann. Die mit den beiden Steuerelementen erzeugbaren Drehmomente M1, M2 sind in jedem Fall so gewählt, dass trotz des aktivierten Ventilators bei einem drohenden Überschreiten der maximal zulässigen Umgebungstemperatur die Luftaustrittsklappe in der Schließstellung verbleibt.

Vorzugsweise können beide Steuerelemente so ausgebildet sein, dass sie temperaturabhängig unterschiedlich hohe Drehmomente M1, M2 erzeugen können. In diesem Zusammenhang hat es sich als zweckmäßig erwiesen, dass das erste Steuerelement derart angeordnet ist, dass es mit Abwärme eines Ventilatormotors des Ventilators beaufschlagbar ist. Dadurch wird in vorteilhafter Weise erreicht, dass das erste Steuerelement durch das Einschalten des Ventilatormotors und die Beaufschlagung mit der während des Betriebs des Ventilatormotors freiwerdenden Abwärme aktiviert werden kann.

In einer bevorzugten Ausführungsform können beide Steuerelemente als Thermoaktuatoren - also als Linearmotoren mit einem temperatursensitiven Element - ausgebildet sein. Thermoaktuatoren zeichnen sich insbesondere durch eine hohe Präzision und eine hohe mechanische Robustheit aus.

In einer alternativen Ausführungsform kann vorgesehen sein, dass beide Steuerelemente als Bimetall-Aktuatoren ausgebildet sind. Bimetall-Aktuatoren sind relativ kostengünstig und zeichnen sich überdies durch eine mechanisch robuste Bauform aus.

Alternativ besteht auch die Möglichkeit, dass eines der beiden Steuerelemente als Thermoaktuator ausgebildet ist und das andere der beiden Steuerelemente als Bimetall-Aktuator ausgebildet ist.

In einer vorteilhaften Weiterbildung besteht die Möglichkeit, dass die Steuerungseinrichtung zumindest ein Federelement aufweist, welches dazu eingerichtet ist, eine Rückstellkraft auf das Hebelelement auszuüben. In einer besonders vorteilhaften Ausführungsform wird vorgeschlagen, dass das Federelement zwischen einem Schwenklager des Hebelelements und dem zweiten Steuerelement angeordnet ist. Das Federelement ist dazu in der Lage, bei einer durch das erste Drehmoment M1 des ersten Steuerelements hervorgerufenen Komprimierung eine auf das Hebelelement wirkende Rückstellkraft zu erzeugen, die ein drittes Drehmoment M3 erzeugt, welches entgegengesetzt zum ersten Drehmoment M1 gerichtet ist und somit ebenfalls der Öffnungsbewegung der Luftaustrittsklappe entgegenwirkt. Nur wenn gilt:

$$M1 > M2+M3$$

wird die Luftaustrittsklappe zumindest teilweise geöffnet, so dass erwärmte Luft in die Umgebung ausgestoßen werden kann. Beim Abkühlen der Steuerelemente unterstützt das von dem Federelement erzeugte dritte Drehmoment überdies in vorteilhafter Weise die Schwenkbewegung des Hebelelements in seine Ruhelage.

Vorzugsweise kann das elektrische Speicherheizgerät ein Luftaustrittsgitter aufweisen, innerhalb dessen die Luftaustrittsöffnungen ausgebildet sind.

Durch die hier vorgestellten Maßnahmen ist es insbesondere möglich, die Luftaustrittsklappe in Abhängigkeit von der Umgebungstemperatur und dem Betriebszustand des Ventilators zumindest teilweise zu öffnen beziehungsweise zu schließen, so dass zu jedem Betriebszeitpunkt die maximal zulässige Umgebungstemperatur beziehungsweise Luftaustrittstemperatur im Bereich der Luftaustrittsöffnungen des Luftaustrittsgitters eingehalten werden kann.

Weitere Merkmale und Vorteile der vorliegenden Erfindung werden deutlich anhand der nachfolgenden Beschreibung eines bevorzugten Ausführungsbeispiels unter Bezugnahme auf die beiliegenden Abbildungen. Darin zeigen:

Fig. 1    eine Vorderansicht eines elektrischen Speicherheizgeräts, das gemäß einem bevorzugten Ausführungsbeispiel der vorliegenden Erfindung ausgeführt ist,

Fig. 2    eine erste Seitenansicht des elektrischen Speicherheizgeräts gemäß Fig.1,

Fig. 3    eine zweite Seitenansicht des elektrischen Speicherheizgeräts gemäß Fig.1,

Fig. 4    eine schematisch stark vereinfachte Darstellung, die eine Steuerungseinrichtung zur Steuerung einer Luftaustrittsklappe des elektrischen Speicherheizgeräts veranschaulicht.

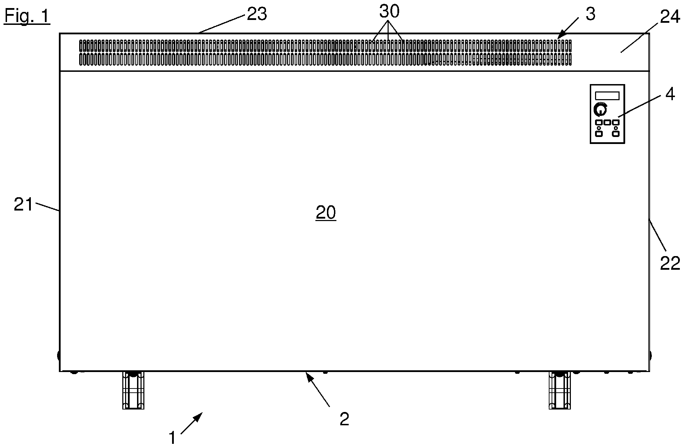

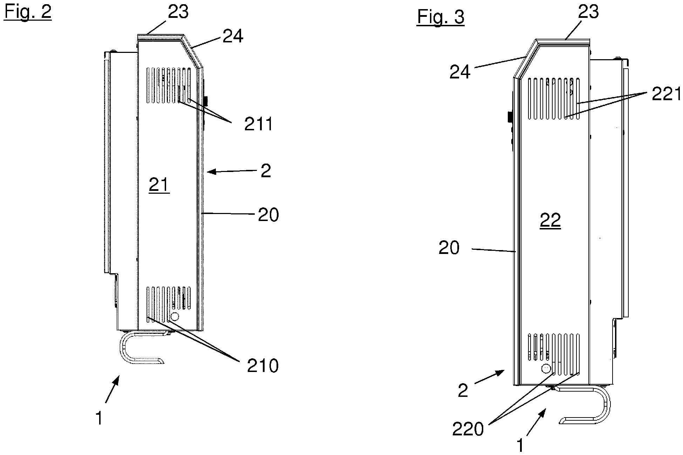

Unter Bezugnahme auf Fig. 1 bis 4 umfasst ein elektrisches Speicherheizgerät 1, das gemäß einem bevorzugten Ausführungsbeispiel der vorliegenden Erfindung ausgeführt ist, ein Außengehäuse 2 mit einer Vorderwand 20, zwei Seitenwänden 21, 22 sowie einer Gehäuseabdeckung 23. Zwischen der Gehäuseabdeckung 23 und der Vorderwand 20 erstreckt sich eine Schrägwand 24, in der ein Luftaustrittsgitter 3 mit einer Vielzahl von Luftaustrittsöffnungen 30 angeordnet ist. Die Luftaustrittsöffnungen 30, durch die während des Betriebs des elektrischen Speicherheizgeräts 1 warme Luft in die Umgebung ausströmen kann, sind in diesem Ausführungsbeispiel schlitzförmig ausgebildet.

In der Vorderwand 23 ist ein Bedienteil 4 mit mehreren Bedienelementen angeordnet, mittels derer ein Benutzer des elektrischen Speicherheizgeräts 1 unterschiedliche Bedieneingaben tätigen kann, so dass zum Beispiel ein Soll-Ladegrad des elektrischen Speicherheizgeräts 1 eingestellt werden kann. Darüber hinaus weist das Bedienteil 4 ein Anzeigemittel auf.

Innerhalb des Außengehäuses 2 ist in an sich bekannter Weise ein hier nicht explizit gezeigtes Innengehäuse angeordnet, innerhalb dessen ein Wärmespeicherkern 5 mit einer Anzahl von Wärmespeicherelementen untergebracht ist. Die Wärmespeicherelemente des Wärmespeicherkerns 5 können mit Hilfe mindestens eines elektrischen Heizelements, das sich durch die Wärmespeicherelemente hindurch erstreckt und zum Beispiel mäanderartig geformt sein kann, erwärmt. Die von dem mindestens einen Heizelement aufgrund eines elektrischen Stromdurchflusses freigesetzte Wärmeenergie kann überwiegend in den Wärmespeicherelementen des Wärmespeicherkerns 5 gespeichert werden. Der Wärmespeicherkern 5 weist vorzugsweise eine Isolierung auf, die ebenfalls innerhalb des Innengehäuses untergebracht sein kann.

In einem unteren Bereich jeder der beiden einander gegenüberliegenden Seitenwände 21, 22 des Außengehäuses 2 sind mehrere Lufteintrittsöffnungen 210, 220 vorgesehen, die vorliegend ebenfalls schlitzförmig ausgeführt sind. Durch diese Lufteintrittsöffnungen 210, 220 kann während des Betriebs des elektrischen Speicherheizgeräts 1 kühle Luft aus der Umgebung in das Innere des Außengehäuses 2 einströmen. Weitere Lufteintrittsöffnungen, durch die ebenfalls kühle Luft aus der Umgebung in das Innere des Außengehäuses 2 einströmen kann, sind in diesem Ausführungsbeispiel an einer Unterseite des Außengehäuses 2 vorgesehen. Diese sind in den Figuren nicht explizit zu erkennen. Darüber hinaus sind in einem oberen Bereich jeder der beiden Seitenwände 21, 22 mehrere Kühllufteintrittsöffnungen 211, 221 ausgebildet, die in dem hier gezeigten Ausführungsbeispiel ebenfalls schlitzförmig ausgebildet sind. Durch diese Kühllufteintrittsöffnungen 211, 221 kann während des Betriebs des elektrischen Speicherheizgeräts 1 kühle Luft aus der Umgebung in das Außengehäuse 2 eintreten, so dass innerhalb des Außengehäuses 2 untergebrachte elektrische beziehungsweise elektronische Bauteilkomponenten durch eine Beaufschlagung mit dieser kühlen Luft wirksam gekühlt werden können.

Das elektrische Speicherheizgerät 1 weist ferner zumindest einen Ventilator 6 auf, der in einem unteren Bereich innerhalb des Außengehäuses 2 angeordnet ist und von einem daran angeschlossenen Ventilatormotor 60 angetrieben wird. Der Ventilator 6 ist dazu eingerichtet, kühle Luft aus der Umgebung durch die Lufteintrittsöffnungen 210, 220 im unteren Bereich des Außengehäuses 2 anzusaugen und nach der Erwärmung durch den Wärmespeicherkern 5 oberhalb des Wärmespeicherkerns 5 durch die Luftaustrittsöffnungen 30 des Luftaustrittsgitters 3 in die Umgebung auszustoßen. Innerhalb des Außengehäuses 2 sind entsprechende Luftströmungskanäle ausgebildet, durch die die während des Betriebs des elektrischen Speicherheizgeräts 1 mittels des Ventilators 6 angesaugte Luft aus der Umgebung nach oben in Richtung der Luftaustrittsöffnungen 30 strömen kann. Die angesaugte Luft strömt dabei an dem von dem mindestens einen elektrischen Heizelement erwärmten Wärmespeicherkern 5 vorbei und wird dabei ihrerseits erwärmt, bevor sie anschließend durch die Luftaustrittsöffnungen 30 des Luftaustrittsgitters 3 in die Umgebung austreten kann.

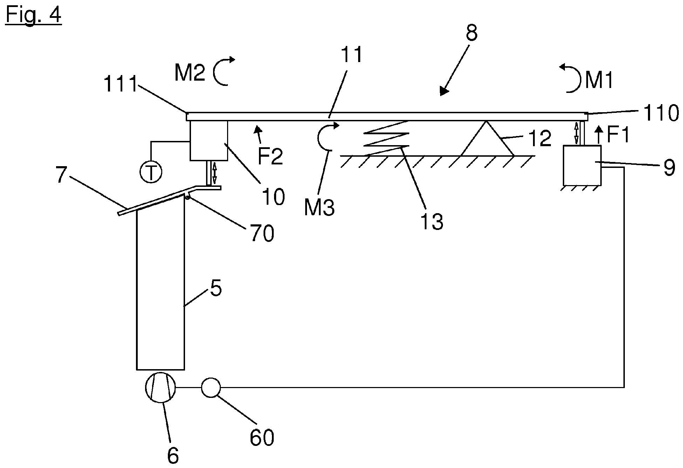

Wie in Fig. 4 zu erkennen, ist innerhalb des Außengehäuses 2 oberhalb des Wärmespeicherkerns 5 eine um eine Schwenkachse 70 schwenkbare Luftaustrittsklappe 7 angeordnet, mittels derer der Luftaustritt aus den Luftaustrittsöffnungen 30 des Luftauslassgitters 3 und damit auch die Umgebungstemperatur am Außengehäuse 2 geregelt werden kann. Die Luftaustrittsklappe 7 ist mittels einer daran angeschlossenen Steuerungseinrichtung 8 derart steuerbar, dass sie in Abhängigkeit von dem Betriebszustand des Ventilators 6 und der Umgebungstemperatur in der Nähe der Luftaustrittsklappe 7 selektiv zumindest teilweise geöffnet beziehungsweise geschlossen werden kann. In dem zumindest teilweise geöffneten Zustand kann die von dem Wärmespeicherkern 5 erwärmte Luft mittels des Ventilators 6, der die natürliche Konvektion der erwärmten Luft unterstützt, durch die Luftaustrittsöffnungen 30 des Luftaustrittsgitters 3, das im oberen Bereich des Außengehäuses 2 vorgesehen ist, in die Umgebung ausgestoßen werden.

In dem hier gezeigten Ausführungsbeispiel umfasst die Steuerungseinrichtung 8 ein erstes Steuerelement 9 und ein zweites Steuerelement 10, die über ein Hebelelement 11 miteinander verbunden sind. Das Hebelelement 11 ist an einem Schwenklager 12 gelagert, so dass es um eine sich in die Zeichenebene hinein erstreckende Schwenkachse verschwenkt werden kann. Die Steuerungseinrichtung 8 umfasst ferner ein Federmittel 13, das eine Rückstellkraft für das Hebelelement 11 zur Verfügung stellt.

Die beiden Steuerelemente 9, 10 sind so ausgebildet, dass sie temperaturabhängig arbeiten und zum Beispiel bei einer temperaturbedingten Ausdehnung gegenläufig wirkende Drehmomente M1, M2 erzeugen können. Die Steuerelemente 9, 10 können zum Beispiel als Thermoaktuatoren - also als elektrische Linearmotoren mit einem temperaturempfindlichen Element - oder als Bimetall-Aktuatoren ausgebildet sein. Auch eine Kombination, bei dem eines der beiden Steuerelemente 9, 10 als Thermoaktuator ausgebildet ist und das andere der beiden Steuerelemente 9, 10 als Bimetall-Aktuator ausgebildet ist, ist grundsätzlich möglich.

Das erste temperaturabhängig arbeitende Steuerelement 9 ist in dem hier gezeigten Ausführungsbeispiel so angeordnet, dass es nach einer Aktivierung des Ventilatormotors 60 dessen Abwärme ausgesetzt ist. Das erste Steuerelement 9 kann sich aufgrund der Erwärmung durch die Beaufschlagung mit der Abwärme des Ventilatormotors 6 ausdehnen und dabei eine Kraft F1 auf ein erstes Ende 110 des Hebelelements 11 ausüben, so dass ein erstes Drehmoment M1 erzeugt werden kann, das über das zweite Steuerelement 10 auf die Luftaustrittsklappe 7 einwirkt. Dieses erste Drehmoment M1 wirkt gegen ein drittes Drehmoment M3, das bei einer Komprimierung des Federelements 13 durch dessen Rückstellkraft erzeugt wird und auf das Hebelelement 11 wirkt.

Das zweite Steuerelement 10 reagiert seinerseits auf die Umgebungstemperatur T der Luftaustrittsklappe 7. Bei einer thermisch induzierten Ausdehnung wird eine Kraft F2 auf ein zweites Ende 111 des Hebelelements 11 ausgeübt, die ein zweites Drehmoment M2 erzeugt, welches entgegengesetzt zu dem ersten Drehmoment M1 des ersten Steuerelements 9 gerichtet ist und somit der Öffnung der Luftaustrittsklappe 7 entgegenwirkt.

Durch diese Maßnahmen ist es möglich, die Luftaustrittsklappe 7 in Abhängigkeit von der Umgebungstemperatur und dem Betriebszustand des Ventilators zumindest teilweise zu öffnen beziehungsweise zu schließen, so dass zu jedem Betriebszeitpunkt die maximal zulässige Luftaustrittstemperatur beziehungsweise Umgebungstemperatur T im Bereich der Luftaustrittsöffnungen 30 des Luftaustrittsgitters 3 eingehalten werden kann.

Wenn die Umgebungstemperatur T innerhalb eines zulässigen Bereichs ist, so dass die Luftaustrittsklappe 7 bei aktiviertem Ventilator 6 geöffnet werden kann, gilt:

$$M1 > M2 + M3.$$

Das erste Drehmoment M1, das von dem ersten Steuerelement 9 durch thermisch induzierte Ausdehnung erzeugt wird, ist somit dazu in der Lage, die Luftaustrittsklappe 7 gegen die beiden in entgegengesetzter Richtung wirkenden Drehmomente M2 und M3 zumindest teilweise zu öffnen, so dass erwärmte Luft aus den Luftaustrittsöffnungen 30 des Luftaustrittsgitters 3 in die Umgebung ausströmen kann.

Wenn sich die Umgebungstemperatur T einem kritischen Wert nähert, erzeugt das zweite Steuerelement 10 ein zweites Drehmoment M2, das gegen das erste Drehmoment M1 des ersten Steuerelements 9 wirkt, so dass gilt:

$$M1 \leq M2 + M3.$$

Dieses hat zur Folge, dass das erste Drehmoment M1, welches vom ersten Steuerelement 9 erzeugt wird, nicht ausreichend hoch genug ist, um die Luftaustrittklappe 7 gegen die Wirkung des zweiten Drehmoments M2 und des dritten Drehmoments M3 zu öffnen.

Die Eigenschaften der beiden Steuerelemente 9, 10 sowie die Hebelverhältnisse sind so gewählt, dass bei aktiviertem Ventilatormotor 60 und bei Überschreiten eines maximal zulässigen Wertes der Umgebungstemperatur T des Luftaustrittsgitters 3 die Luftaustrittsklappe 7 in jedem Fall geschlossen bleibt, so dass keine weitere erwärmte Luft durch die Luftaustrittsöffnungen 30 in die Umgebung ausströmen und somit die Umgebungstemperatur weiter erhöhen kann.

**Patentansprüche**

1.　Elektrisches Speicherheizgerät (1), umfassend ein Außengehäuse (2), innerhalb dessen ein elektrisch aufheizbarer Wärmespeicherkern (5) und ein Ventilator (6) untergebracht sind, wobei das Außengehäuse (2) eine Anzahl von Lufteintrittsöffnungen (210, 211), durch die Luft aus der Umgebung in das Außengehäuse (2) einströmen kann und durch eine Strömungsführung innerhalb des Außengehäuses (2) an dem Wärmespeicherkern (5) entlanggeführt werden kann und eine Anzahl von Luftaustrittsöffnungen (30), durch die die Luft nach der Erwärmung durch den Wärmespeicherkern (5) in die Umgebung austreten kann, aufweist,
**dadurch gekennzeichnet, dass**

- die Lufteintrittsöffnungen (210, 211) in einem unteren Bereich des Außengehäuses (2) und die Luftaustrittsöffnungen (30) in einem oberen Bereich des Außengehäuses (2) ausgebildet sind,
- der Ventilator (6) dazu eingerichtet ist, die Luft aus der Umgebung durch die Lufteintrittsöffnungen (210, 211) anzusaugen und nach der Erwärmung durch den Wärmespeicherkern (5) oberhalb des Wärmespeicherkerns (5) durch die Luftaustrittsöffnungen (30) in die Umgebung auszustoßen, und
- oberhalb des Wärmespeicherkerns (5) eine schwenkbare Luftaustrittsklappe (7) angeordnet ist, die an eine Steuerungseinrichtung (8) angeschlossen ist, die dazu eingerichtet ist, den Ausstoß der erwärmten Luft aus den Luftaustrittsöffnungen (30) durch zumindest teilweises Öffnen und Schließen der Luftaustrittsklappe (7) zu regulieren.

2.　Elektrisches Speicherheizgerät (1) nach Anspruch 1, **dadurch gekennzeichnet, dass** die Luftaustrittsklappe (7) mittels der Steuerungseinrichtung (8) derart ansteuerbar ist, dass durch ein selektives Öffnen und Schließen der Luftaustrittsklappe (7) die Umgebungstemperatur am Außengehäuse (2) im Bereich der Luftaustrittsöffnungen (30) regelbar ist.

3.　Elektrisches Speicherheizgerät (1) nach einem der Ansprüche 1 oder 2, **dadurch gekennzeichnet, dass** die Steuerungseinrichtung (8) zwei Steuerelemente (9, 10) aufweist, die über ein Hebelelement (11) miteinander verbunden sind, wobei ein erstes Steuerelement (9) so ausgebildet ist, dass es bei aktiviertem Ventilator (6) ein erstes Drehmoment (M1) erzeugen kann, welches ein zumindest teilweises Öffnen der Luftaustrittsklappe (7) bewirken kann, und wobei ein zweites Steuerelement (10) so ausgebildet ist, dass es in Abhängigkeit von einer Umgebungstemperatur (T) ein zweites Drehmoment (M2) erzeugen kann, welches entgegengesetzt zum ersten Drehmoment (M1) gerichtet ist und ein Schließen der Luftaustrittsklappe (7) bewirken kann.

4.　Elektrisches Speicherheizgerät (1) nach Anspruch 3, **dadurch gekennzeichnet, dass** beide Steuerelemente (9, 10) so ausgebildet sind, dass sie temperaturabhängig unterschiedlich hohe Drehmomente (M1, M2) erzeugen können.

5. Elektrisches Speicherheizgerät (1) nach einem der Ansprüche 3 oder 4, **dadurch gekennzeichnet, dass** das erste Steuerelement (9) derart angeordnet ist, dass es mit Abwärme eines Ventilatormotors (60) des Ventilators (6) beaufschlagbar ist.

6. Elektrisches Speicherheizgerät (1) nach einem der Ansprüche 3 bis 5, **dadurch gekennzeichnet, dass** beide Steuerelemente (9, 10) als Thermoaktuatoren ausgebildet sind.

7. Elektrisches Speicherheizgerät (1) nach einem der Ansprüche 3 bis 5, **dadurch gekennzeichnet, dass** beide Steuerelemente (9, 10) als Bimetall-Aktuatoren ausgebildet sind.

8. Elektrisches Speicherheizgerät (1) nach einem der Ansprüche 3 bis 5, **dadurch gekennzeichnet, dass** eines der beiden Steuerelemente (9, 10) als Thermoaktuator ausgebildet ist und das andere der beiden Steuerelemente (9, 10) als Bimetall-Aktuator ausgebildet ist.

9. Elektrisches Speicherheizgerät (1) nach einem der Ansprüche 3 bis 8, **dadurch gekennzeichnet, dass** die Steuerungseinrichtung (8) zumindest ein Federelement (13) aufweist, welches dazu eingerichtet ist, eine Rückstellkraft auf das Hebelelement (11) auszuüben.

10. Elektrisches Speicherheizgerät (1) nach Anspruch 9, **dadurch gekennzeichnet, dass** das Federelement (13) zwischen einem Schwenklager (12) des Hebelelements (11) und dem zweiten Steuerelement (10) angeordnet ist.

11. Elektrisches Speicherheizgerät (1) nach einem der Ansprüche 1 bis 10, **dadurch gekennzeichnet, dass** das elektrische Speicherheizgerät (3) ein Luftaustrittsgitter (3) aufweist, innerhalb dessen die Luftaustrittsöffnungen (30) ausgebildet sind.

Fig. 1

Fig. 2

Fig. 3

Fig. 4

Europäisches Patentamt
European Patent Office
Office européen des brevets

**EUROPÄISCHER RECHERCHENBERICHT**

Nummer der Anmeldung

EP 17 17 3609

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | DE 195 39 704 A1 (WERNER FRANZ STEFFAN DR [AT]; LACKNER FRANZ [AT]) 2. Mai 1996 (1996-05-02) | 1,2,11 | INV. F24H7/04 F24D19/00 |
| A | * Spalten 1-4; Abbildungen 1, 4, 5 * ----- | 3-10 | F24H9/20 |
| X | DE 199 12 764 A1 (DIERMANN GUENTHER [DE]) 28. September 2000 (2000-09-28) | 1,2 | |
| A | * Spalte 6; Abbildung 1 * ----- | 3-11 | |
| A | DE 19 25 941 U (BAUKNECHT GMBH G [DE]) 28. Oktober 1965 (1965-10-28) * Seiten 4-8; Abbildungen 1, 2 * ----- | 3-10 | |
| A | EP 0 017 476 A1 (TI CREDA MFG [GB]) 15. Oktober 1980 (1980-10-15) * Seiten 2-6 * ----- | 3-10 | |
| A | DE 29 40 928 A1 (PRL SOC) 24. April 1980 (1980-04-24) * das ganze Dokument * ----- | 1-11 | |

**RECHERCHIERTE SACHGEBIETE (IPC)**

F24H
F24D

Der vorliegende Recherchenbericht wurde für alle Patentansprüche erstellt

| Recherchenort | Abschlußdatum der Recherche | Prüfer |
|---|---|---|
| München | 21. September 2017 | Schwaiger, Bernd |

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 17 17 3609

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

21-09-2017

| Im Recherchenbericht angeführtes Patentdokument | Datum der Veröffentlichung | Mitglied(er) der Patentfamilie | Datum der Veröffentlichung |
|---|---|---|---|
| DE 19539704 A1 | 02-05-1996 | DE 19539672 A1<br>DE 19539704 A1 | 30-05-1996<br>02-05-1996 |
| DE 19912764 A1 | 28-09-2000 | KEINE | |
| DE 1925941 U | 28-10-1965 | CH 457769 A<br>DE 1925941 U<br>DK 114713 B<br>FI 45383 B<br>GB 1108738 A<br>LU 50876 A1<br>NL 6605055 A<br>NO 117322 B | 15-06-1968<br>28-10-1965<br>28-07-1969<br>31-01-1972<br>03-04-1968<br>13-06-1966<br>17-10-1966<br>28-07-1969 |
| EP 0017476 A1 | 15-10-1980 | EP 0017476 A1<br>US 4473740 A | 15-10-1980<br>25-09-1984 |
| DE 2940928 A1 | 24-04-1980 | BE 879351 A1<br>DE 2940928 A1<br>ES 484886 A1<br>FR 2443026 A1 | 01-02-1980<br>24-04-1980<br>01-04-1980<br>27-06-1980 |

EPO FORM P0461

Für nähere Einzelheiten zu diesem Anhang : siehe Amtsblatt des Europäischen Patentamts, Nr.12/82